# EUROPEAN PATENT APPLICATION

(11) **EP 4 787 740 A1**
(43) Date of publication of application: **05.08.2026**
(21) Application number: 24923831.2
(22) Date of filing: 24.06.2024
(51) Int. Cl.: H04B 11/00, H04B 1/04

(54) **COMMUNICATION SYSTEM, MEDICAL DEVICE, COMMUNICATION METHOD, AND PROGRAM**

(30) Priority: 06.02.2024 JP 2024016232
(71) Applicant: Terumo Kabushiki Kaisha, Tokyo 151-0072 (JP)
(72) Inventor: YAKUSHIJI, Yusuke, Ashigarakami-gun, Kanagawa 259-0151 (JP); OGAHARA, Atsushi, Ashigarakami-gun, Kanagawa 259-0151 (JP)
(74) Representative: Prüfer & Partner mbB Patentanwälte · Rechtsanwälte
(86) International application number: PCT/JP2024/022873
(87) International publication number: WO 2025/169510

(57) **Abstract**

A communication system (10) is a communication system (10) including a first device (12) and a second device (14) that communicates with the first device (12), in which: the first device (12) includes a storage unit (34) that stores a data string to be transmitted to the second device (14), and a transmission unit (38) that sequentially transmits data signals corresponding to data constituting the data string stored in the storage unit (34); and the transmission unit (38) sequentially inserts dummy signals different from the data signal before the sequentially transmitted data signals.

## Description

### Technical Field

The present disclosure relates to a communication system, a medical device, a communication method, and a program.

### Background Art

JP 11-120424 A discloses a control device of a vending machine. The control device of a vending machine includes a main control unit and a plurality of terminal control units. The main control unit and each terminal control unit are communicably connected to each other by a communication line. The main control unit includes an oscillation circuit using a ceramic oscillator or a crystal oscillator. The terminal control unit includes a CR oscillation circuit. By matching the oscillation frequencies of the oscillation circuits, synchronous transmission between the main control unit and each terminal control unit becomes possible.

### Citation List

### Patent Literature

Patent Literature 1: JP 11-120424 A

### Summary of Invention

In an oscillation circuit with low accuracy such as a CR oscillation circuit, the oscillation frequency changes due to a disturbance such as a temperature change. When a significant frequency deviation or the like occurs in the devices constituting the communication system, the communication quality is affected. When the frequency deviation becomes significantly large, a signal cannot be received well.

An object of the present invention is to solve the above-described problem.

(1) A first aspect of the present disclosure is a communication system including a first device and a second device that communicates with the first device, in which: the first device includes a storage unit that stores a data string to be transmitted to the second device, and a transmission unit that sequentially transmits data signals corresponding to data constituting the data string stored in the storage unit; and the transmission unit sequentially inserts a dummy signal different from the data signal before the sequentially transmitted data signals.

In the communication system, the transmission unit of the first device alternately transmits the data signal and the dummy signal. In other words, the transmission unit of the first device transmits the dummy signal after the transmission of the first data signal and before the transmission of the second data signal. As a result, the dummy signal is inserted between the first data signal and the second data signal.

According to the communication system described above, the second device can recognize that the transmission of the first data signal has ended by recognizing the dummy signal. In other words, the second device can distinguish and recognize the first data signal and the second data signal. As a result, even when a significant frequency deviation or the like occurs, each of the plurality of data signals can be reliably recognized. For example, even if the transmission unit of the first device continuously transmits a plurality of data signals indicating the same data value, the second device can reliably recognize the data values of the respective data signals.

(2) In the communication system described in item (1), the transmission unit may perform transmission using any of frequency modulation, amplitude modulation, and phase modulation.
(3) In the communication system described in item (1) or (2), the transmission unit may perform transmission by wireless communication.
(4) In the communication system described in item (3), the transmission unit may perform transmission by sound wave communication.
(5) In the communication system according to any one of items (1) to (4), the first device may be a medical device.
(6) A second aspect of the present disclosure is a medical device including: a storage unit that stores a data string to be transmitted to an information device; and a transmission unit that sequentially transmits data signals corresponding to data constituting the data string stored in the storage unit, in which the transmission unit sequentially inserts dummy signals different from the data signals before the sequentially transmitted data signals.
(7) A third aspect of the present disclosure is a communication method including a transmission step of sequentially transmitting, from a first device to a second device, data signals corresponding to data constituting a data string stored in a storage unit that stores the data string to be transmitted from the first device to the second device, in which in the transmission step, dummy signals different from the data signal are sequentially inserted before the sequentially transmitted data signals.

According to the communication method described above, the second device can recognize that the transmission of the first data signal has ended by recognizing the dummy signal. In other words, the second device can distinguish and recognize the first data signal and the second data signal. As a result, even when a significant frequency deviation or the like occurs, each of the plurality of data signals can be reliably recognized. For example, even if the transmission unit of the first device continuously transmits a plurality of data signals indicating the same data value, the second device can reliably recognize the data values of the respective data signals.

(8) A fourth aspect of the present disclosure is a program for causing a computer to execute the communication method according to the third aspect.

According to the present invention, the second device can reliably recognize each of the plurality of data signals transmitted from the transmission unit of the first device.

### Brief Description of Drawings

[Fig. 1] Fig. 1 is a functional block diagram of a communication system according to an embodiment of the present invention.
[Fig. 2] Fig. 2 is an explanatory diagram of a configuration of a medical device (liquid medicine administration device).
[Fig. 3] Fig. 3 is a flowchart of transmission processing executed in the medical device (liquid medicine administration device).
[Fig. 4] Fig. 4 is an explanatory diagram of transmission processing executed in the medical device (liquid medicine administration device).

### Description of Embodiments

If each device constituting a communication system includes an oscillation circuit or the like with high accuracy, a frequency deviation or the like can be suppressed. Accordingly, communication can be performed satisfactorily.

On the other hand, according to the present invention, communication can be suitably performed even when an oscillation circuit with low accuracy is provided in any device constituting the communication system. Hereinafter, an embodiment of the present invention will be described.

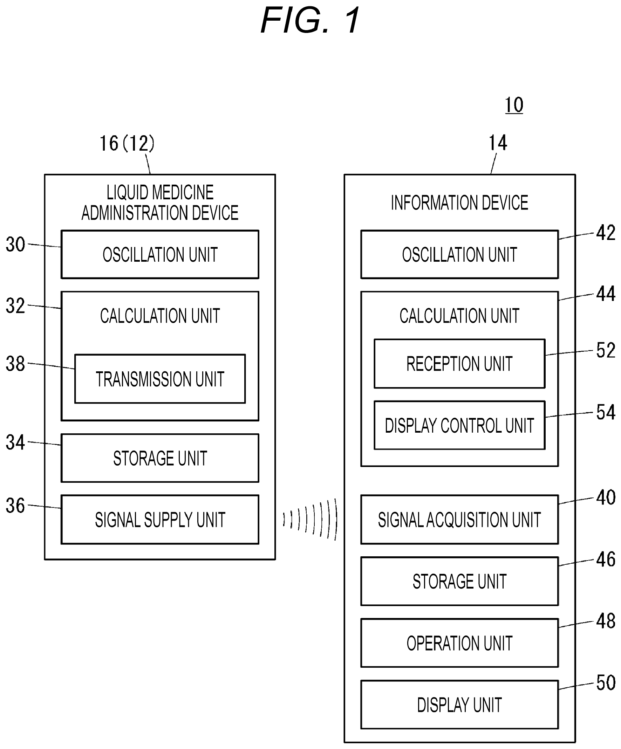

Fig. 1 is a functional block diagram of a communication system 10 according to an embodiment of the present invention. An embodiment described below is the communication system 10 capable of transmitting medical information from a medical device (first device) 12 to an information device (second device) 14 by wireless communication (sound wave communication) using sound waves. Note that the first device is not limited to the medical device 12. The second device is not limited to the information device 14. In addition, wireless communication using radio waves may be performed instead of wireless communication using sound waves. Furthermore, communication from the medical device 12 to the information device 14 may be performed via a communication cable. That is, the communication system 10 may perform wired communication.

### [1 Configuration of Communication System 10]

As illustrated in Fig. 1, the communication system 10 according to the present embodiment includes the medical device 12 and the information device 14. The communication system 10 is a system in which the information device 14 acquires medical information held by the medical device 12.

In the communication system 10, the medical device 12 and the information device 14 may each be a single unit or a plurality of units. For example, in a case where the communication system 10 is used in a hospital or the like, it can be assumed that the communication system 10 includes a plurality of medical devices 12. In this case, for example, one information device 14 can manage the medical information of the plurality of medical devices 12 separately. Furthermore, the communication system 10 may include a plurality of types of medical devices 12 (for example, a liquid medicine administration device 16, a sphygmomanometer, a thermometer, and the like). In this case, for example, one information device 14 can manage medical information related to a plurality of types of medical devices 12 of a plurality of patients.

### [1-1 Configuration of Medical Device 12 (Liquid Medicine Administration Device 16)]

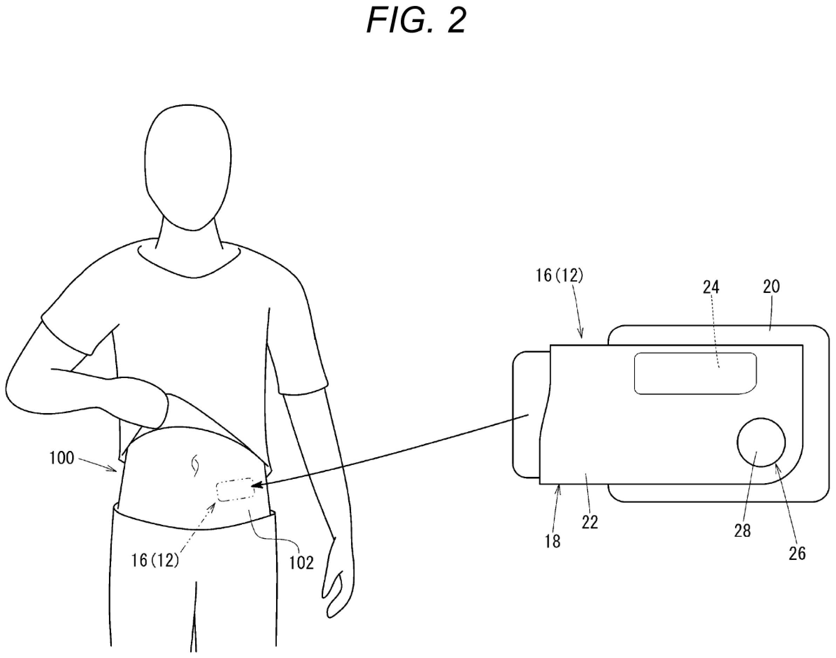

Fig. 2 is an explanatory diagram of a configuration of the medical device 12 (liquid medicine administration device 16). As illustrated in Fig. 2, the medical device 12 is a device attachable to and detachable from a living body 100. In other words, the medical device 12 is used in a state of being in contact with the skin (body surface 102) of the living body 100. The medical device 12 can acquire medical information in a state of being attached to the living body 100. In the present embodiment, the liquid medicine administration device 16 for administering a liquid medicine to the living body 100 is exemplified as the medical device 12. Note that the medical device 12 is not limited to the liquid medicine administration device 16, and may be a measuring instrument such as a sphygmomanometer, a thermometer, a blood glucose meter, or a pulse oximeter.

The liquid medicine administration device 16 is a patch-type device to be affixed to the body surface 102. The liquid medicine administration device 16 continuously administers a liquid medicine into the living body 100 over a relatively long time (for example, about several minutes to several hours). The liquid medicine administration device 16 may intermittently administer the liquid medicine into the living body 100. Examples of the liquid medicine include protein preparations such as insulin preparations. Examples of a drug include a narcotic analgesic and a diuretic.

The liquid medicine administration device 16 includes a device body 18 and an attachment member 20. The device body 18 includes a housing 22, a prefilled syringe 24, and a puncture unit 26. The housing 22 accommodates various members including the prefilled syringe 24. The inside of the prefilled syringe 24 is filled with a liquid medicine in advance. The puncture unit 26 includes a puncture operation unit 28 for operating a puncture needle (not illustrated). When a user presses the puncture operation unit 28, the puncture needle protrudes from the housing 22. The attachment member 20 is fixed to the housing 22. The attachment member 20 has an adhesive surface that can be affixed to the body surface 102.

In such a liquid medicine administration device 16, the user (for example, a patient) presses the puncture operation unit 28 in a state where the attachment member 20 is affixed to the body surface 102, whereby the living body 100 is punctured with the puncture needle. Thereafter, the administration of the liquid medicine from the prefilled syringe 24 to the living body 100 is started. When the administration of the liquid medicine is completed, the user removes the liquid medicine administration device 16 from the body surface 102.

As illustrated in Fig. 1, the liquid medicine administration device 16 further includes an oscillation unit 30, a calculation unit (computer) 32, a storage unit 34, and a signal supply unit 36. Note that the liquid medicine administration device 16 may also include components other than the above-mentioned components, but the description thereof is omitted here.

The oscillation unit 30 is configured by including, for example, an oscillation circuit (CR oscillation circuit, LC oscillation circuit, ring oscillator, or the like), a frequency divider, and the like. The oscillation unit 30 continuously generates an electric signal having a predetermined oscillation frequency.

The calculation unit 32 is configured by, for example, a processor such as a central processing unit (CPU) or a graphics processing unit (GPU). That is, the calculation unit 32 is configured by processing circuitry. The calculation unit 32 includes a transmission unit 38. The transmission unit 38 can be implemented by executing a program stored in the storage unit 34 by the calculation unit 32.

Note that at least a part of the transmission unit 38 may be implemented by an integrated circuit such as an application specific integrated circuit (ASIC) or a field-programmable gate array (FPGA). Furthermore, at least a part of the transmission unit 38 may be configured by an electronic circuit including a discrete device.

The transmission unit 38 performs transmission processing for transmitting a signal indicating medical information to the information device 14. For example, the transmission unit 38 reads the medical information stored in the storage unit 34. The medical information is configured by, for example, a binary data string. The medical information includes data (digital values) of a plurality of bits. The transmission unit 38 can sequentially read 1-bit data from the data string.

The transmission unit 38 generates a data signal corresponding to the data (digital value) read from the storage unit 34, and outputs the generated data signal to the signal supply unit 36. The transmission unit 38 generates and outputs an edge signal and a dummy signal different from the data signal separately from the data signal. The edge signal is a signal transmitted before and after transmission of a series of data signals. The dummy signal is a signal transmitted after the transmission of a first data signal and before the transmission of a second data signal subsequent to the first data signal. In this manner, the transmission unit 38 generates and sequentially outputs each of a data signal indicating 0, a data signal indicating 1, the edge signal, and the dummy signal. That is, the transmission unit 38 can sequentially transmit four different signals. Each signal is a signal of one bit.

The transmission unit 38 modulates each of the four different signals into an electric signal having a frequency corresponding to each signal on the basis of the electric signal generated by the oscillation unit 30. For example, the transmission unit 38 generates a signal modulated by multi-level frequency shift keying (FSK). (2) In the communication system described in item (1), the transmission unit may perform transmission using any of frequency modulation, amplitude modulation, and phase modulation. The frequency f1 is, for example, 14 kHz, but is not limited thereto. When transmitting the edge signal, the transmission unit 38 generates an electric signal having a frequency f2 and outputs the electric signal to the signal supply unit 36. The frequency f2 is, for example, 16 kHz, but is not limited thereto. When transmitting the dummy signal, the transmission unit 38 generates an electric signal having a frequency f3 and outputs the electric signal to the signal supply unit 36. The frequency f3 is, for example, 18 kHz, but is not limited thereto. When transmitting a data signal indicating 1, the transmission unit 38 generates an electric signal having a frequency f4 and outputs the electric signal to the signal supply unit 36. The frequency f4 is, for example, 20 kHz, but is not limited thereto.

The storage unit 34 is configured by a volatile memory (not illustrated) and a non-volatile memory (not illustrated). Examples of the volatile memory include a random access memory (RAM). The volatile memory is used as a working memory of the processor, and temporarily stores data and the like necessary for processing or calculation. Examples of the non-volatile memory include a read only memory (ROM) and a flash memory. The non-volatile memory is used as a memory for storage, and stores a program, a table, a map, and the like. At least a part of the storage unit 34 may be provided in the processor, the integrated circuit, or the like as described above.

The storage unit 34 stores medical information in advance. In a case where the medical device 12 is the liquid medicine administration device 16, the medical information includes identification information (serial number) of the liquid medicine administration device 16 and administration end information for notifying that the administration of the liquid medicine has ended normally or abnormally. Note that in a case where the medical device 12 is a measuring instrument (sphygmomanometer or the like), the medical information includes identification information of the measuring instrument and vital information (blood pressure or the like) measured by the measuring instrument.

The signal supply unit 36 is configured by, for example, a speaker. The signal supply unit 36 converts the electric signal generated by the transmission unit 38 into sound waves and outputs the sound waves. The signal supply unit 36 converts the electric signal having the frequency of f1 into sound waves having the frequency of f1, and outputs the sound waves. The signal supply unit 36 converts the electric signal having the frequency of f2 into sound waves having the frequency f2, and outputs the sound waves. The signal supply unit 36 converts the electric signal having the frequency of f3 into sound waves having a frequency of f3, and outputs the sound waves. The signal supply unit 36 converts the electric signal having the frequency f4 into sound waves having the frequency f4 and outputs the sound waves.

Note that in the communication system 10, in a case where a radio wave signal is transmitted from the liquid medicine administration device 16 to the information device 14, the signal supply unit 36 is configured by, for example, an antenna. In this case, the signal supply unit 36 outputs radio waves of an electric signal of each frequency.

### [1-2 Configuration of Information Device 14]

Examples of the information device 14 include, but are not limited to, a smartphone and a tablet. The information device 14 can acquire medical information from the liquid medicine administration device 16. The information device 14 can manage the medical information acquired from the liquid medicine administration device 16.

The information device 14 includes a signal acquisition unit 40, an oscillation unit 42, a calculation unit 44, a storage unit 46, an operation unit 48, and a display unit 50. The information device 14 may include components other than these components, but the description thereof is omitted here.

The signal acquisition unit 40 is configured by, for example, a microphone. The signal acquisition unit 40 acquires sound waves transmitted from the liquid medicine administration device 16, converts the acquired sound waves into an electric signal, and outputs the electric signal to the calculation unit 44. For example, the signal supply unit 36 converts sound waves having the frequency f1 into an electric signal having the frequency f1 and outputs the electric signal. The signal acquisition unit 40 converts sound waves having the frequency of f2 into an electric signal having the frequency of f2 and outputs the electric signal. The signal acquisition unit 40 converts sound waves having the frequency of f3 into an electric signal having the frequency of f3 and outputs the electric signal. The signal acquisition unit 40 converts sound waves having the frequency f4 into an electric signal having the frequency f4 and outputs the electric signal.

The oscillation unit 42 is configured by including, for example, an oscillation circuit (CR oscillation circuit, LC oscillation circuit, ring oscillator, crystal oscillation circuit, and the like), a frequency divider, and the like. The oscillation unit 42 continuously generates an electric signal having a predetermined oscillation frequency.

The calculation unit 44 is configured by a processor such as a CPU or a GPU. That is, the calculation unit 44 is configured by a processing circuit. The calculation unit 44 includes a reception unit 52 and a display control unit 54. The reception unit 52 and the display control unit 54 can be implemented by executing a program stored in the storage unit 46 by the calculation unit 44.

Note that at least a part of the reception unit 52 and the display control unit 54 may be implemented by an integrated circuit such as an ASIC or an FPGA. Furthermore, at least a part of the reception unit 52 and the display control unit 54 may be configured by an electronic circuit including a discrete device.

The reception unit 52 performs processing for receiving a signal transmitted from the liquid medicine administration device 16. The reception unit 52 performs spectrum analysis of the electric signal output from the signal acquisition unit 40 by, for example, fast Fourier transformation (FFT). The timing of extracting data is set on the basis of the frequency of the electric signal generated by the oscillation unit 42. The reception unit 52 detects the frequency of the signal transmitted from the liquid medicine administration device 16 by performing spectrum analysis. As a result, the reception unit 52 identifies whether the transmitted signal is a data signal indicating 0, a data signal indicating 1, an edge signal, or a dummy signal.

The display control unit 54 performs display control for displaying information on the display unit 50. For example, when the medical information is received by the reception unit 52, the display control unit 54 performs display control for displaying the medical information on the display unit 50.

The storage unit 46 is configured by a volatile memory (not illustrated) and a non-volatile memory (not illustrated). Examples of the volatile memory include a RAM and the like, for example. The volatile memory is used as a working memory of the processor, and temporarily stores data and the like necessary for processing or calculation. Examples of the non-volatile memory include a ROM and a flash memory. The non-volatile memory is used as a memory for storage, and stores a program, a table, a map, and the like. At least a part of the storage unit 46 may be provided in the processor, the integrated circuit, or the like as described above.

The storage unit 46 stores a frequency table that associates the type (content) of a signal with a frequency value of the signal transmitted from the liquid medicine administration device 16. In the frequency table, a type "data signal indicating 0" is associated with the frequency value of f1. In the frequency table, a type "edge signal" is associated with the frequency value of f2. In the frequency table, a type "dummy signal" is associated with the frequency value of f3. In the frequency table, a type "data signal indicating 1" is associated with the frequency value of f4.

The operation unit 48 is used when the user operates the information device 14. The display unit 50 includes a display element (not illustrated). As illustrated in Fig. 2, the medical device 12 is a device attachable to and detachable from a living body 100. The operation unit 48 and the display unit 50 can be configured by a touch panel (not illustrated) provided with such a display element, but are not limited thereto. The operation unit 48 may be configured by a keyboard, a mouse, or the like.

### [2 Transmission Processing Executed in Liquid Medicine Administration Device 16]

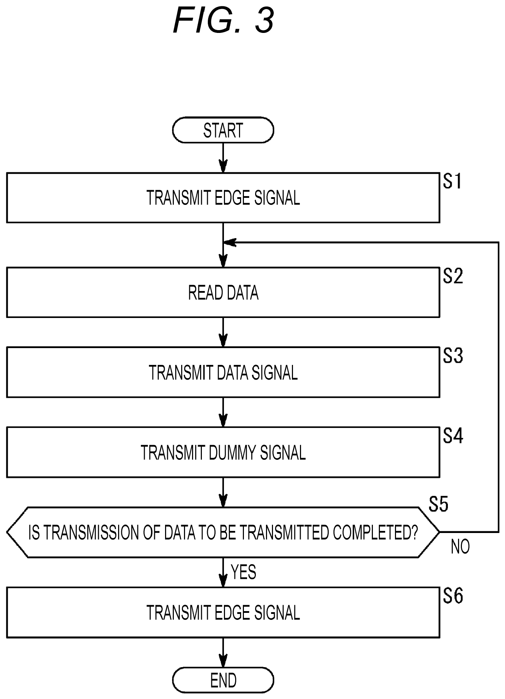

Fig. 3 is a flowchart of transmission processing executed in the medical device 12 (liquid medicine administration device 16). The liquid medicine administration device 16 performs the transmission processing illustrated in Fig. 3 at a predetermined timing. For example, when the administration of the liquid medicine to the living body 100 is completed, a sensor (not illustrated) included in the liquid medicine administration device 16 outputs a signal indicating that the administration of the liquid medicine is completed to the calculation unit 32. When receiving this signal, the calculation unit 32 executes the transmission processing illustrated in Fig. 3.

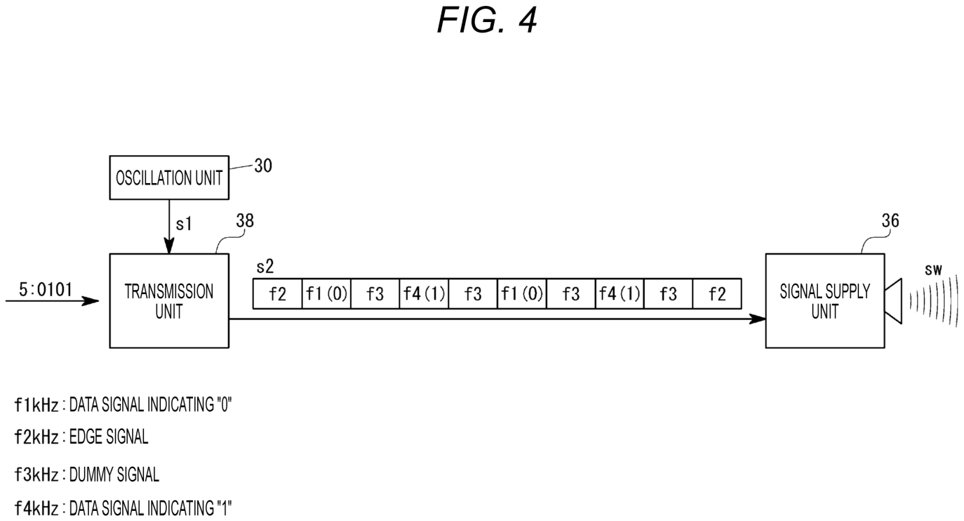

An example of data transmission will be described below with reference to Fig. 4 together with Fig. 3. Fig. 4 is an explanatory diagram of transmission processing executed in the medical device 12 (liquid medicine administration device 16). Fig. 4 illustrates an example in which a single-digit decimal number ("5" in this example) included in the data indicating the medical information is transmitted. The decimal number "5" is stored as the binary number "0101" in the storage unit 34. Note that the data indicating the medical information includes a plurality of digits of alphanumeric characters (decimal number and alphabetical character), but here, for convenience of description, a single-digit decimal number will be used as an example.

In step S1, the transmission unit 38 performs processing for transmitting the edge signal from the signal supply unit 36. As illustrated in Fig. 4, the transmission unit 38 generates the electric signal s2 having the frequency f2 on the basis of an electric signal s1 generated by the oscillation unit 30, and outputs the electric signal s2 to the signal supply unit 36. The edge signal generated here means start of transmission of a plurality of pieces of data indicating medical information. The signal supply unit 36 converts the electric signal s2 with the frequency f2 into sound waves sw with the frequency f2, and transmits the sound waves sw to the information device 14. The sound waves sw are an edge signal.

A series of processing in steps S2 to S5 is executed once for each piece of data included in the data string to be transmitted to the information device 14. For example, as illustrated in Fig. 4, in a case where the data string to be transmitted is "0101", a series of processing of steps S2 to S5 is executed four times.

In step S2, the transmission unit 38 reads the medical information from the storage unit 34. That is, the transmission unit 38 sequentially reads the data included in the data string to be transmitted to the information device 14 from the storage unit 34. For example, as illustrated in Fig. 4, in a case where the data string to be transmitted is "0101", the transmission unit 38 reads "0", which is the first data in "0101", from the storage unit 34 in the first processing of step S2 performed four times.

Similarly, in the second processing of the processing of step S2 performed four times, the transmission unit 38 reads "1", which is the second data in "0101", from the storage unit 34. In the third processing of the processing of step S2 performed four times, the transmission unit 38 reads "0", which is the third data in "0101", from the storage unit 34. In the fourth processing of the processing of step S2 performed four times, the transmission unit 38 reads "1", which is the fourth data in "0101", from the storage unit 34.

In step S3, the transmission unit 38 generates and transmits a data signal corresponding to the data read in step S2. For example, in the first and third processing of the processing of step S3 performed four times, the transmission unit 38 generates the electric signal s2 having a frequency corresponding to "0", that is, the electric signal s2 which is f1, on the basis of the electric signal s1 generated by the oscillation unit 30, and outputs the electric signal s2 to the signal supply unit 36. The signal supply unit 36 converts the electric signal s2 having the frequency f1 into the sound waves sw having the frequency f1, and transmits the sound waves sw to the information device 14. The sound waves sw are a data signal.

Similarly, in the second processing and the fourth processing of the processing of step S3 performed four times, the transmission unit 38 generates the electric signal s2 having a frequency corresponding to "1", that is, the electric signal s2 which is f4, on the basis of the electric signal s1 generated by the oscillation unit 30, and outputs the electric signal s2 to the signal supply unit 36. The signal supply unit 36 converts the electric signal s2 having the frequency f4 into the sound waves sw having the frequency f4 and transmits the sound waves sw to the information device 14. The sound waves sw are a data signal.

In step S4, the transmission unit 38 performs processing for transmitting a dummy signal from the signal supply unit 36. As illustrated in Fig. 4, the transmission unit 38 generates the electric signal s2 having the frequency f3 on the basis of the electric signal s1 generated by the oscillation unit 30, and outputs the electric signal s2 to the signal supply unit 36. The signal supply unit 36 converts the electric signal s2 having the frequency f3 into the sound waves sw having the frequency f3 and transmits the sound waves sw to the information device 14. The sound waves sw are a dummy signal. As a result, the dummy signal is inserted before the signal to be transmitted next. In other words, the dummy signal is inserted between two signals. The dummy signal has a function of separating two consecutive pieces of data included in a data string.

In step S5, the transmission unit 38 determines whether or not the transmission of the data to be transmitted is completed. When the transmission of all the data included in the data string to be transmitted is completed (step S5: YES), the processing proceeds to step S6. On the other hand, when the transmission of all the data included in the data string to be transmitted is not completed (step S5: NO), the processing returns to step S2, and the processing for transmitting the next data signal and the dummy signal is performed.

In step S6, the transmission unit 38 performs the same processing as in step S1. That is, the transmission unit 38 performs processing for transmitting the edge signal from the signal supply unit 36. As illustrated in Fig. 4, the transmission unit 38 generates the electric signal s2 having the frequency f2 on the basis of an electric signal s1 generated by the oscillation unit 30, and outputs the electric signal s2 to the signal supply unit 36. The signal supply unit 36 converts the electric signal s2 having the frequency f2 into the sound waves sw having the frequency f2 and transmits the sound waves sw. The sound waves sw are an edge signal. As illustrated in Fig. 4, the edge signal having the frequency f2 and transmitted after the dummy signal having the frequency f3 means that the data transmission is completed.

### [3 Reception Processing in Information Device 14]

The signal acquisition unit 40 of the information device 14 sequentially receives the sound waves sw transmitted from the liquid medicine administration device 16. The signal acquisition unit 40 converts the received sound waves sw into the electric signal s2 and sequentially outputs the electric signals s2 to the calculation unit 44.

The reception unit 52 of the calculation unit 44 sequentially receives the electric signals s2. The reception unit 52 performs spectrum analysis by FFT on the electric signal s2 to detect a frequency value of the electric signal s2. The reception unit 52 identifies the type (data signal indicating 0, data signal indicating 1, edge signal, and dummy signal) of the electric signal s2 on the basis of the frequency table stored in the storage unit 46 and the detected frequency value. That is, the reception unit 52 demodulates the sound waves sw transmitted from the liquid medicine administration device 16.

The display control unit 54 performs display control for displaying medical information (identification information of the liquid medicine administration device 16 and administration end information) on the display unit 50. As a result, the display unit 50 displays a message notifying that the administration of the liquid medicine has ended normally or abnormally in the liquid medicine administration device 16.

### [4 Modification]

In the embodiment described above, the modulation scheme used by the transmission unit 38 of the liquid medicine administration device 16 is frequency modulation. Note that the modulation scheme by the transmission unit 38 may be amplitude modulation or phase modulation.

### [5 Effects]

The liquid medicine administration device 16 is a disposable product. Therefore, for example, it is conceivable to use an inexpensive oscillation circuit (CR oscillation circuit, LC oscillation circuit, ring oscillator, or the like) for the transmission unit 38 of the liquid medicine administration device 16. However, an inexpensive oscillation circuit has a problem of low accuracy. An oscillation frequency deviation is likely to occur in an oscillation circuit with low accuracy.

In the communication system 10 described above, the transmission unit 38 of the liquid medicine administration device 16 alternately transmits the data signal and the dummy signal. In other words, the transmission unit 38 of the liquid medicine administration device 16 transmits the dummy signal after transmission of the first data signal and before transmission of the second data signal. As a result, the dummy signal is inserted between the first data signal and the second data signal.

According to the communication system 10 described above, the reception unit 52 of the information device 14 can recognize that the transmission of the first data signal has ended by recognizing the dummy signal. In other words, the reception unit 52 of the information device 14 can distinguish and recognize the first data signal and the second data signal. As a result, even if a significant frequency deviation or the like occurs in the liquid medicine administration device 16 or the like, the reception unit 52 of the information device 14 can reliably recognize each of the plurality of data signals transmitted from the transmission unit 38 of the liquid medicine administration device 16. For example, even if the transmission unit 38 of the liquid medicine administration device 16 continuously transmits a plurality of data signals indicating the same value, the reception unit 52 of the information device 14 can reliably recognize each data signal.

Although the present disclosure has been described in detail, the present disclosure is not limited to the individual embodiments described above. Various additions, substitutions, modifications, partial deletions, and the like may be made to these embodiments without departing from the gist of the present disclosure or without departing from the spirit of the present disclosure derived from the content described in the claims and equivalents thereof. Further, the embodiments can be implemented in combination. For example, the order of operations and the order of processes in the above embodiments are provided as an example, and they are not limitative. The same applies to the case where numerical values or expressions are used in the description of the above embodiments.

## Claims

1. A communication system comprising a first device and a second device that communicates with the first device, wherein:
the first device includes a storage unit that stores a data string to be transmitted to the second device, and a transmission unit that sequentially transmits data signals corresponding to data constituting the data string stored in the storage unit; and
the transmission unit sequentially inserts a dummy signal different from the data signal before the sequentially transmitted data signals.

2. The communication system according to claim 1, wherein the transmission unit performs transmission by one of frequency modulation, amplitude modulation, and phase modulation.

3. The communication system according to claim 1, wherein the transmission unit performs transmission by wireless communication.

4. The communication system according to claim 3, wherein the transmission unit performs transmission by sound wave communication.

5. The communication system according to any one of claims 1 to 4, wherein the first device is a medical device.

6. A medical device comprising
a storage unit that stores a data string to be transmitted to an information device, and
a transmission unit that sequentially transmits data signals corresponding to data constituting the data string stored in the storage unit, wherein
the transmission unit sequentially inserts dummy signals different from the data signal before the sequentially transmitted data signals.

7. A communication method comprising a transmission step of sequentially transmitting, from a first device to a second device, data signals corresponding to data constituting a data string stored in a storage unit that stores the data string to be transmitted from the first device to the second device, wherein
in the transmission step, a dummy signal different from the data signal is sequentially inserted before the sequentially transmitted data signals.

8. A program for causing a computer to execute the communication method according to claim 7.
